Europäisches Patentamt

European Patent Office

Office européen des brevets

(19)

(11) Veröffentlichungsnummer : **0 106 345**
**B1**

(12) # EUROPÄISCHE PATENTSCHRIFT

(45) Veröffentlichungstag der Patentschrift :
30.12.86

(51) Int. Cl.⁴ : **G 01 N 27/22**

(21) Anmeldenummer : 83110321.3

(22) Anmeldetag : 15.10.83

(54) Mess- und Linearisierungsschaltung für einen kapazitiven Messfühler.

(30) Priorität : 18.10.82 DE 3238507

(43) Veröffentlichungstag der Anmeldung :
25.04.84 Patentblatt 84/17

(45) Bekanntmachung des Hinweises auf die Patenterteilung : 30.12.86 Patentblatt 86/52

(84) Benannte Vertragsstaaten :
CH DE FR GB LI NL SE

(56) Entgegenhaltungen :
ELEKTOR, Band 72, April 1981, Seiten 419-421, Canterbury, Kent, GB; "Humidity sensor"
ELEKTOR, Band 7, Nr. 7/8, Juli/August 1981, Seiten
72-73, Canterbury, Kent, GB; "Humidity sensor"

(73) Patentinhaber : Honeywell Regelsysteme GmbH
Kaiserleistrasse 55
D-6050 Offenbach am Main (DE)

(72) Erfinder : Lehle, Erhard, Dipl.-Ing.
Wilhelmstrasse 24
D-6052 Mühlheim (DE)

(74) Vertreter : Herzbach, Dieter et al
Honeywell Europe S.A. Holding KG Patent- und Lizenzabteilung Kaiserleistrasse 55 Postfach 184
D-6050 Offenbach am Main (DE)

EP 0 106 345 B1

# Beschreibung

Die vorliegende Erfindung betrifft eine Schaltungsanordnung nach dem Gattungsbegriff des Anspruches 1.

Eine derartige Schaltungsanordnung ist aus dem Valvo-Bericht 79 04 23 « Technische Informationen für die Industrie » bekannt. Die dort dargestellte und beschriebene Prinzipschaltung verwendet zwei Multivibratoren, wobei die Dauer der Rechteckimpulse des einen Multivibrators der Kapazität eines Referenzkondensators proportional sind. Diese Rechteckimpulse werden benutzt, um die Rechteckschwingungen des zweiten Multivibrators zu synchronisieren, dessen Impulsdauer der Kapazität des Meßfühlers proportional ist. Die Ausgangssignale beider Multivibratoren werden gegeneinandergeschaltet, so daß sich eine resultierende Impulsdauer ergibt, die der Differenz der Impulsdauer beider Multivibratoren entspricht.

Abgesehen davon, daß Meßungenauigkeiten entstehen können, wenn bei schwankender Temperatur beide Multivibratoren nicht genau das gleiche Verhalten aufweisen, hängt der Meßwert auch von der Betriebsspannung ab ; diese muß daher stabilisiert werden. Zur Kompensation der nicht linearen Kennlinie des kapazitiven Meßfühlers dient eine Schaltung bestehend aus einem RC-Glied das einmal über eine Diode von der Meßspannung und zum anderen über einen Widerstand von der Betriebsspannung gespeist wird. Die Aufgabe der vorliegenden Erfindung besteht gegenüber dieser bekannten Schaltung darin, die Meßgenauigkeit zu erhöhen und den Schaltungsaufwand zu verringern. Die Lösung dieser Aufgabe gelingt gemäß der im Anspruch 1 gekennzeichneten Schaltungsanordnung. Weitere vorteilhafte Ausgestaltungen der erfindungsgemäßen Schaltungsanordnung sind den Unteransprüchen entnehmbar.

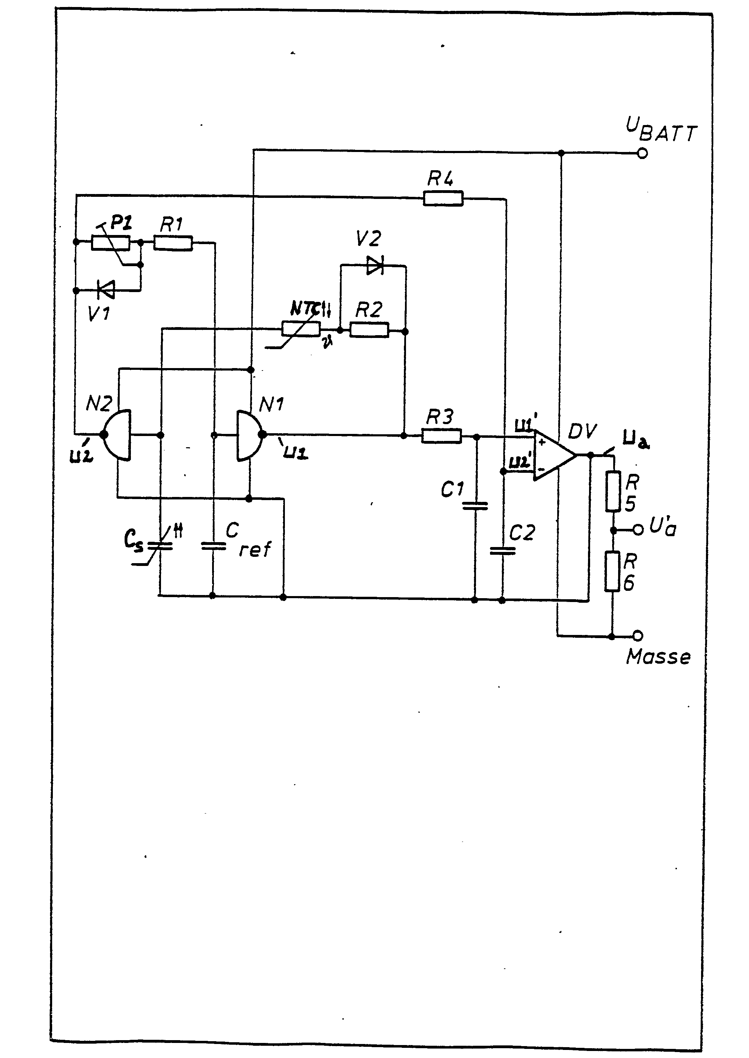

Anhand der einzigen Figur der beiliegenden Zeichnung sei im folgenden die erfindungsgemäße Schaltungsanordnung näher beschrieben.

Ein astabiler Multivibrator ist aus zwei CMOS-NAND-Bausteinen N1 und N2 aufgebaut, die symmetrisch beschaltet sind. Ein Referenzkreis besteht aus einem Eichpotentiometer P1, das in Reihe zu einem Widerstand R1 und zu einem Referenzkondensator $C_{ref}$ geschaltet ist. Dem Eichpotentiometer P1 ist ferner eine Diode V1 parallelgeschaltet. Ein Meßkreis besteht aus einem Widerstand R2, zu dem ein Widerstand mit negativem Temperaturkoeffizienten NTC und ein Meßkondensator $C_S$ in Reihe geschaltet sind. Zu dem Widerstand R2 ist eine Diode V2 parallelgeschaltet. Bei dem Meßkondensator $C_S$ handelt es sich beispielsweise um einen kapazitiven Feuchtefühler, der eine nichtlineare Kennlinie aufweist. Den Referenz- und den Meßkreis bilden die kreuzgekoppelten Zweige des astabilen Multivibrators. Die beiden Ausgangssignale U1 und U2 des Multivibrators werden über mittelwertbildende RC-Glieder bestehend aus den Widerständen R3 bzw. R4 und den Kondensatoren C1 bzw. C2 den hochohmigen Eingänge eines Differenzverstärkers DV mit hoher Gleichtaktunterdrückung zugeführt. Die Differenz der Eingangsspannungen U1' und U2' erscheint verstärkt um den Verstärkungsfaktor des Differenzverstärkers DV am Ausgang als Ausgangsspannung Ua. Diese Ausgangsspannung ist einmal über die Reihenschaltung zweier Widerstände R5 und R6 an Masse gelegt, wobei die eigentliche Ausgangsspannung Ua an dem so gebildeten Spannungsteiler abgenommen wird.

Die Ausgangsspannung Ua des Differenzverstärkers DV bildet einen Pol der Betriebsspannung, mit der der astabile Multivibrator MV gespeist wird. Die Linearisierungswirkung ergibt sich folgendermaßen : Steigt beispielsweise die relative Feuchtigkeit, so wächst die Kapazität des kapazitiven Feuchtefühlers an und die Ausgangsspannung Ua des Differenzverstärkers DV wird positiver. Somit sinkt die Betriebsspannung des Multivibrators, da dessen negative Versorgung mit der Ausgangsspannung Ua des Differenzverstärkers verbunden ist. Mit sinkender Versorgungsspannung des Multivibrators sinkt aber auch die Empfindlichkeit $U1-U2/\Delta C_S$. Die progressive Sensorkennlinie wird daher durch die degressive Wandlerkennlinie linearisiert. Durch den Verstärkungsfaktor des Differenzverstärkers DV läßt sich — einmal empirisch ermittelt — die optimale Linearität einstellen.

Die Temperaturabhängigkeit des Feuchtefühlers ist zwischen 10 °C und 20 °C höher als zwischen 20 °C und 30 °C. Der Widerstand NTC mit negativem Temperaturkoeffizienten ist auf diese nichtlineare Temperaturbeziehung abgestimmt und kompensiert somit die Temperaturabhängigkeit des Meßwertes.

## Patentansprüche

1. Schaltungsanordnung zur Linearisierung der Kennlinie eines kapazitiven Meßfühlers ($C_S$), insbesondere eines Feuchtefühlers, in einer einen Multivibrator umfassenden Meßschaltung, die die Kapazität des Meßfühlers mit der Kapazität eines Referenzkondensators ($C_{ref}$) vergleicht, dadurch gekennzeichnet, daß der kapazitive Meßfühler ($C_S$) und der Referenzkondensator ($C_{ref}$) jeweils in den kreuzgekoppelten Zweigen ein und desselben Multivibrators angeordnet sind und daß die Ausgangssignale (U1, U2) des Multivibrators über mittelwertbildende RC-Glieder (R3, C1 ; R4, C2) auf die Eingänge eines Differenzverstärkers (DV) geführt sind, dessen Ausgangssignal (Ua) den einen Pol der Betriebsspannung bildet, mit der der Multivibrator gespeist wird.

2. Schaltungsanordnung nach Anspruch 1, dadurch gekennzeichnet, daß ein Abgleichwiderstand (P1) zu dem Referenzkondensator ($C_{ref}$) in Reihe geschaltet ist.

3. Schaltungsanordnung nach Anspruch 1, dadurch gekennzeichnet, daß ein temperaturabhängige Widerstand (NTC) zu dem kapazitiven Meßfühler (C$_S$) in Reihe geschaltet ist.

**Claims**

1. Circuit arrangement for linearizing the characteristic of a capacitive measuring sensor (C$_S$), in particular of a humidity sensor having a measuring circuit comprising a multivibrator, wherein said measuring circuit compares the capacity of said measuring sensor to the capacity of a reference capacitor (C$_{ref}$), characterized in that said capacitive measuring sensor (C$_S$) and said reference capacitor (C$_{ref}$) each are arranged within the cross-coupled branches of one and the same multivibrator and that the output signals (U1, U2) of said multivibrator *via* average forming RC-means (R3, C1 ; R4, C2) are connected to the inputs of a differential amplifier (DV) with the output signal (Ua) of said differential amplifier serving as one terminal of the operating voltage which is fed to the multivibrator.

2. Circuit arrangement according to claim 1, characterized in that a calibration resistor (P1) is connected in series to the reference capacitor (C$_{ref}$).

3. Circuit arrangement according to claim 1, characterized in that a temperature responsive resistor (NTC) is connected in series to the capacitive measuring sensor (C$_S$).

**Revendications**

1. Circuit de commutation pour la linéarisation de la courbe caractéristique d'un capteur capacitif (C$_S$), en particulier d'un capteur d'humidité, dans un circuit de mesure comprenant un multivibrateur, qui compare la capacité du capteur capacitif à la capacité d'un condensateur de référence (C$_{ref}$), caractérisé en ce que le capteur capacitif (C$_S$) et le condensateur de référence (C$_{ref}$) sont disposés dans les branches croisées d'un seul et même multivibrateur et que les signaux de sortie (U1, U2) du multivibrateur sont introduits par l'intermédiaire d'éléments moyenneurs RC (R3, C1 ; R4, C2) dans les entrées d'un amplificateur différentiel (DV) dont le signal de sortie (Ua) forme un pôle de la tension de fonctionnement qui alimente le multivibrateur.

2. Circuit suivant la revendication 1, caractérisé en ce qu'une résistance d'équilibrage (P1) est branchée en série avec le condensateur de référence (C$_{ref}$).

3. Circuit suivant la revendication 1, caractérisé en ce qu'une résistance dépendant de la température (NTC) est branchée en série avec le capteur capacitif (C$_S$).

0 106 345

1